# EUROPEAN PATENT SPECIFICATION

(11) **EP 2 766 406 B1**
(45) Date of publication and mention of the grant of the patent: **25.11.2020**
(21) Application number: 12756473.0
(22) Date of filing: 10.09.2012
(51) Int. Cl.: C08G 18/42, C08G 63/668

(54) **HYBRID POLYESTER-POLYETHER POLYOLS FOR IMPROVED DEMOLD EXPANSION IN POLYURETHANE RIGID FOAMS**
HYBRIDE POLYESTER-POLYETHER-POLYOLE ZUR VERBESSERTEN ENTFORMUNGSEXPANSION IN POLYURETHANHARTSCHAUMSTOFFEN
POLYOLS DE POLYESTER-POLYÉTHERS HYBRIDES POUR L'EXPANSION AU DÉMOULAGE AMÉLIORÉE DANS DES MOUSSES DE POLYURÉTHANE RIGIDES

(30) Priority: 14.10.2011 IT MI20111869
(43) Date of publication of application: 20.08.2014
(73) Proprietor: Dow Global Technologies LLC, Midland, MI 48674 (US)
(72) Inventor: JIMENEZ, Jorge, Lake Jackson, Texas 77566 (US); SHUTOV, Pavel L., NL-4532LH Terneuzen (NL); FELSTED, William N., II, Lake Jackson, Texas 77566 (US); ROSE, Melissa M., Angleton, Texas 77515 (US); MICHELETTI, Davide, I-40127 Bologna (IT)
(74) Representative: Beck Greener LLP
(86) International application number: PCT/EP2012/067641
(87) International publication number: WO 2013/053555

(56) References cited:
- WO-A1-2011/137011
- US-A- 3 455 886

## Description

The present invention relates generally to certain polyester-polyether polyols suitable for blending with other polyols or other materials mutually compatible with the polyester-polyether polyols to achieve polyurethane products.

### BACKGROUND OF THE INVENTION

The use of a polyol in the preparation of polyurethanes by reaction of the polyol with a polyisocyanate in the presence of a catalyst and optionally other ingredients is well known. Aromatic polyester polyols are a type of polyol widely used in the manufacture of polyurethane and polyurethane-polyisocyanurate foams and resins.

Aromatic polyester polyols are attractive in making polyurethane products as they tend to be low in cost and are adaptable for many end-use applications where the products have good properties. One class of aromatic polyester polyols widely used is a polyol produced by esterification of phthalic acid or phthalic acid anhydride with an aliphatic polyhydric alcohol, for example, diethylene glycol. This type of polyester polyol is capable of reacting with organic isocyanates to produce, for example, coatings, adhesives, sealants, and elastomers ("CASE materials"), that can have excellent characteristics, such as tensile strength, adhesion, and abrasion resistance. Such aromatic polyester polyols may also be used in formulations for production of rigid polyurethane or polyisocyanurate foam.

One problem generally encountered when using aromatic polyester polyols, is they generally have low functionality, that is, a functionality close to 2. This low functionality generally has a negative impact on green compressive and compressive strength. High functionality polyols such as glycerin or pentaerythritol may be used to increase the functionality of the polyester polyol. However this increased functionality typically comes at the expense of a significant increase in viscosity.

With an increased emphasis on the use of non-ozone depleting blowing agents, such as hydrocarbons, a further drawback of aromatic based polyester polyols in formulations is they generally lead to low hydrocarbon compatibility. Efforts to increase the hydrocarbon compatibility include modifications of the polyester such as the incorporation of fatty acids. While incorporation of a fatty acids into the polyester leads to significant improvements in compatibility, such modifications typically come at the expense of polyester functionality or at the expense of flame retardation.

Polyester-ether polyols based on phathalic anhydride, diethylene glycol and propylene oxide are described, for example, in U.S. Patents 6,569,352 and 6,855,844. The produced polyester-ether polyols are obtained by alkoxylation of polyester polyols where 55-80 wt% by weight of the polyester-ether is obtained from propylene oxide. These polyester-ether polyols are reported to improve solubility and compatibility to mixtures of either polyether and/or polyester polyols. These materials, however, have lower hydroxyl number and functionality than those desired for rigid foam applications US 3 455 886 A discloses polyether-polyester polyols which are especially suitable for use in the manufacture of polyurethane foams, particularly rigid or semi-rigid foams. In the example 3, the preparation of a polyether-polyester polyol from glycerol (molecular weight 92), phthalic anhydride and propylene oxide is described: in a first step which occurs at 130°C, the glycerol is reacted with the phthalic anhydride to form a half-ester. Thereafter, propylene oxide is added to propoxylate the half-ester. A polyether-polyester polyol of OH-number 215 is obtained.

Thus, there is a need for aromatic containing polyols suitable for rigid foam applications where the polyols have good hydrocarbon compatibility and a functionality greater than 2 which are economical to produce and can be converted into cellular foams having excellent properties.

### SUMMARY OF THE INVENTION

The present invention relates to a class of aromatic polyester-polyether polyols having an average functionality of at least 2.7 produced by mixing phthalic anhydride with a 3 functional alcohol under conditions to form a phtahlic anhydride half-ester followed by alkoxylation of the half-ester to produce a polyester-polyether polyol. In one aspect, the invention is to a polyester-polyether polyol produced by the steps of mixing:
1) phthalic anhydride with an alcohol having a nominal functionality of 3 and a molecular weight of 90 to 500 under conditions to form a phthalic anhydride half-ester ; and
2) alkoxylating the half-ester formed in step 1 to form a polyester-polyether polyol having a hydroxyl number of from 200 to 350;
wherein the alcohol is a polyether polyol containing at least 70 weight percent of polyoxypropylene;
wherein the remainder of the blend is at least one second polyol wherein the second polyol is a polyether polyol, a polyester polyol or a combination thereof having a functionality of 2 to 8 and a molecular weight of 100 to 2,000.

In a further embodiment, the molar ratio of anhydride to polyalcohol in step 1 above is from 1:1 to 1:1.5. In another embodiment, the mixing in step 1 is done at a temperature of from 90 °C to 140 °C.

In another embodiment, the invention is a polyester-polyether polyol produced by the steps consisting essentially of steps 1 and 2 given above.

The invention also relates to methods for making such polyester-polyether polyols. In a further embodiment, the invention is a cellular polyurethane foam made using such polyester-polyether polyols.

The polyester-polyether polyols may be used in polyol blends, particularly in polyol formulations for making appliance rigid foams. Such blends comprise from 10 to 40 weight percent of a polyester-polyether polyol as described above and the remainder is at least one second polyol wherein the second polyol is a polyether polyol, a polyester polyol or a combination thereof having a functionality of 2 to 8 and a molecular weight of 100 to 2,000.

In a further aspect, the present invention provides a reaction system for production of a rigid foam comprising a polyol composition comprising:
1) a polyol component comprising from 10 to 40 weight percent of a polyol which is the reaction product of
   A) phthalic anhydride
   B) a 3 functional alcohol having a molecular weight of 90 to 500, wherein the alcohol is a polyether polyol containing at least 70 weight percent of polyoxypropylene;
   C) an epoxide,
      wherein A and B are present in a molar ratio of 1:1 to 1:1.5, and C is present in the reaction in an amount to give a polyester-polyether polyol with a hydroxyl number of 200 to 350;
2) a polyisocyanate and
3) optionally additives and auxiliaries known per se. Such optional additives or auxiliaries are selected from the groups consisting of dyes, pigments, internal mold release agents, physical blowing agents, chemical blowing agents, fire retardants, fillers, reinforcements, plasticizers, smoke suppressants, fragrances, antistatic agents, biocides, antioxidants, light stabilizers, adhesion promoters and combination of these.

In a further aspect the polyester polyols of the present invention comprise from 10 to 40 wt percent of a polyol blend in a reaction system for producing rigid foam.

In another aspect the invention provides a process for preparing a rigid polyurethane foam, comprising
a) forming a reactive mixture containing at least
   1) a polyol component comprising from 10 to 40 weight percent of a polyester-polyether polyol as described above
   2) a polyisocyanate,
   3) at least one hydrocarbon, hydrofluorocarbon, hydrochlorofluorocarbon, fluorocarbon, dialkyl ether, hydrofluoolefin (HFO), hydrochlorofluoroolefin (HCFO), fluorine-substituted dialkyl ether physical blowing agent; and
b) subjecting the reactive mixture to conditions such that the reactive mixture expands and cures to form a rigid polyurethane foam.

### DETAILED DESCRIPTION OF THE PREFERRED EMBODIMENT

The aromatic polyester-polyether polyols of the present invention are prepared from a reaction mixture comprising at least A) phthalic anhydride; B) at least one alcohol having a nominal functionality of 3 and molecular weight of from 90 500; and C) at least one epoxide. It was found the polyesters of the present invention can be used to produce polyurethane foams having good green strength. It was also found such polyester-polyether polyols have good compatibility with other polyether polyols and with physical blowing agents, such as hydrocarbon blowing agents. The term "green strength" denotes the basic integrity and strength of the foam at demold, also referred to as demold expansion.

The aromatic component (component A) of the present polyester-polyether polyol is derived primarily from phthalic anhydride. Phthalic anhydride is commercially available as flakes or molten.

The polyol alcohol component (Component B) having a nominal functionality of 3 is generally a branched aliphatic alcohol or a polyether polyol. Examples of branched aliphatic alcohols include glycerin and trimethylol propane. The polyether polyol for Component B include those obtained by the alkoxylation of suitable starting molecules (initiators) with a C₂ to C₄ alkylene oxide (epoxide), such as ethylene oxide, propylene oxide, 1,2- or 2,3-butylene oxide, tetramethylene oxide or a combination of two or more thereof. The polyether polyol will generally contain greater than 70% by weight of oxyalkylene units derived from propylene oxide (PO) units and preferably at least 75% by weight of oxyalkylene units derived from PO. In other embodiments the polyol will contain greater than 80 wt% of oxyalkylene units derived from PO and in a further embodiment, 85 wt% or more of the oxyalkylene units will be derived from PO. In some embodiments, propylene oxide will be the sole alkylene oxide used in the production of the polyol. When an alkylene oxide other than PO is used, it is preferred the additional alkylene oxide, such as ethylene or butylene oxide is fed as a co-feed with the PO or fed as an internal block. Catalysis for this polymerization of alkylene oxides can be either anionic or cationic, with catalysts such as potassium hydroxide, cesium hydroxide, boron trifluoride, or a double cyanide complex (DMC) catalyst such as zinc hexacyanocobaltate or quaternary phosphazenium compound. In the case of alkaline catalysts, these alkaline catalysts are preferably removed from the polyol at the end of production by a proper finishing step, such as coalescence, magnesium silicate separation or acid neutralization.

The polypropylene oxide based polyol, generally has a molecular weight of from 200 to 500. In one embodiment, the molecular weight is 220 or greater. In a further embodiment the molecular weight is less than 400, or even less than 300.

The initiators for production of polyether component B have a functionality of 3; that is contains 3 active hydrogens. As used herein, unless otherwise stated, the functionality refers to the nominal functionality. Non-limiting examples of such initiators include, for example, glycerol, trimethylol propane. The molar ratio of Component A to Component B is generally from 1:1 to 1:1.5. In a further embodiment the molar ratio is from 1:1 to 1:1.3. In another embodiment the molar ratio is from 1:1 to 1:1.25.

To minimize transersterification between Components A and B and promote formation of the half-ester, conditions for the reaction may generally include a temperature ranging from 80 °C to 150 °C. More desirably the temperature may range from 90 °C to 140 °C, and in certain particular but non-limiting embodiments may range from 100 °C to 135 °C. Pressure may range from 0.3 bar absolute (bara) to 6 bar absolute (30 to 600 kPa) and more desirably from 1 bar absolute to 4 bar absolute (100 to 400 kPa), and may include partial pressure from epoxide, nitrogen and optionally solvent. Time of the reaction may vary from 1 hour (h) to 24 h, and more desirably from 2 to 12 h, and most desirably from 2 to 6 h.

A solvent that is inert to the reactants and the product, such as toluene or xylene may be included to facilitate contact between the reactants, but may not be needed depending upon the selections of starting materials. Where included, the amount of such solvent is desirably minimized and may ranges from 10 to 50 percent (%), more desirably from 25 to 35%, based on the total weight of the carboxyl group-containing component (half-ester). A solvent that is not inert to the reactants and/or the product under the reaction conditions, such as tetrahydrofuran (THF), may be copolymerized with the epoxide and incorporated into the growing polyester-polyether chains.

After formation of the half-ester, alkoxylation of the half-esters to from polyester-polyether polyols may be done in the same reactor by addition of an alkylene oxide. While any combination of the C₂ to C₄ alkylene oxide described above may be used, for production of rigid foams, for reaction properties and properties of the final foam, the alkylene oxide feed will generally contain 70% by weight or more of propylene oxide (PO) units. Preferably the feed will contain at at least 75% by weight of PO. In other embodiments the feed will contain greater than 80 wt% of PO and in a further embodiment, 85 wt% or more of PO. In some embodiments, propylene oxide will be the sole alkylene oxide used in the production of the polyester-polyetherpolyol. When an alkylene oxide other than PO is used, it is preferred the additional alkylene oxide, such as ethylene or butylene oxide is fed as a co-feed with the PO or fed as an internal block.

This polymerization can be done autocatalytically (due to presence of acid groups in the half ester) or aided by catalysts such as double cyanide complex (DMC) catalyst such as zinc hexacyanocobaltate, quaternary phosphazenium compound, amine catalysts or superacid catalysts

In one embodiment, the alkoxylation is done in the presence of a superacid catalyst. Superacid catalysts are well known to those skilled in the art, for example, see U.S. Patents 6,989,432 and 5,304,688. Methods of measuring superacidity and the definition of a superacid as used herein are provided in the U.S. Pat. 5,304,688. Suitable superacid catalysts include, but are not limited to, fluorinated sulfonic acids, for example Magic acid (FSO3H-SbF5) and fluorosulfonic acid (HSO3F), trifluoromethanesulphonic (triflic) acid (HSO3CF3), other perfluoroalkylsulfonic acids, fluoroantimonic acid (HSbF6), carborane superacid (HCHB11C111), perchloric acid (HClO4), tetrafluoroboric acid (HBF4), hexafluorophosphoric acid (HPF6), boron trifluoride (BF3), antimony pentafluoride (SbF5), phosphorous pentafluoride (PF5), a sulfated metal oxyhydroxyide, a sulfated metal oxysilicate, a superacid metal oxide, supported Lewis or Brønsted acids, and various zeolites and heterogeneous acid catalysts, perfluorinated ion exchange polymers (PFIEP), such as the NAFIONTM PFIEP products, a family of perfluorinated sulfonic acid polymers (commercially available from E. I. du Pont de Nemours and Company, Wilmington, Del. (hereinafter, DuPont)), or a mixture thereof.

Particularly suitable superacids for use in the present invention are protic superacids. Commercially available protic superacids include trifluoromethanesulfonic acid (CF3SO3H), also known as triflic acid, fluorosulfonic acid (FSO3H), and fluoroantimonic acid, all of which are at least a thousand times stronger than sulfuric acid. The strongest protic superacids are prepared by the combination of two components, a strong Lewis acid and a strong Brønsted acid. If used, the protic superacid may be used alone, i.e., with no other catalyst (e.g., for finishing of a batch containing unreacted alkylene oxide), or as a sole catalyst in one of the synthetic steps in a multistep synthesis, or may be used in combination with one or both a double metal cyanide catalyst and/or a tertiary amine catalyst.

A preferred protic superacid is trifluoromethanesulfonic acid.

The preferred amount of the superacid to be used depends on many factors, including the desired reaction rate, the type of polyether and carboxylic acid used, catalyst type, reaction temperature, and other considerations. Preferably, if used in the present invention, the superacid is used at catalytic in a range from 10 ppm to 1,000 ppm, based on the weight of the final polyester-polyether polyol. In a further embodiment it is present in an amount below 500 ppm, preferably below 200 ppm. In some embodiment the amount of superacid catalyst will be below 50 ppm, or even below 25 ppm, based on the weight of the final polyester-polyether polyol. In some embodiments, the superacid is used at catalytic level between 10 to 20 ppm, based on the weight of the polyester-polyether polyol. The level of superacid employed can be affected by the level of basic impurities and/or by the level of the optional DMC catalyst and/or by the level of tertiary amine catalyst, contained in the polyester-polyether polyol.

Metal salts of protic superacids may also be used in the present invention. Such salts are generally derived from the protic superacids described above as suitable for use in the process. Mixtures of strong protic superacids and metal salts of the acids can be used. Preferred metal salts useful as catalysts for the process of the invention are metal salts of triflic acid, fluorosulfonic acid, and fluoroantimonic acid. Triflate salts are particularly preferred.

Preferred metal salts include metal salts of protic superacids in which the metal is selected from Group 1IB, Group IB, Group IIIA, Group IVA, Group VA, and Group VIII. Thus, the metal can be, for example, zinc, copper, aluminum, tin, antimony, bismuth, iron, nickel.

Suitable metal salts include, but are not limited to, zinc triflate, copper(II) triflate, aluminum triflate, tin(II) triflate, and the like. Mixtures of metal salts can be used. Alternatively, a triflate of a heavy metal can be used, such as for example a cobalt, nickel, zirconium, tin triflate or a tetra-alkylammonium triflate, for example see USP 4,543,430.

As with the protic superacid catalysts, the amount of the metal salt of a super acid catalyst to be used depends on many factors as described above, and thus will be present in an amount as disclosed for the superacids. A preferred metal salt of a protic superacid is aluminum triflate.

The amount of alkylene oxide added to the half-ester will generally be in an amount to produce a polyester-polyether having a hydroxyl number of 200 to 350. In a further embodiment the hydroxyl number will be from greater than 220 and less than 330.

This contacting of the reaction product of step 1 with an epoxide may be accomplished in any standard alkoxylation reactor. Such may be designed to enable batch, semi-batch or continuous processing, and thus desirably contains at least one, and in some embodiments two, feed and metering means, in addition to a means for adding a fresh catalyst. A means of stirring or mixing, in order to maximize contact between the catalyst, carboxyl group-containing component, and alkoxylation agent (i.e., the epoxide component), such as a stirrer, impellers, rotation capability (e.g., a rotary mixer) and a motor is desirably included. Finally, temperature and pressure control capability is desirable in order to facilitate and maximize the alkoxylation for optimal yield and quality of the final hybrid polyester-polyether.

Conditions for the reaction may generally include a temperature ranging from 80 °C to 150 °C. More desirably the temperature may range from 90 °C to 140 °C, and in certain particular but non-limiting embodiments may range from 110 °C to 130 °C. Pressure may range from 0.3 bar absolute (bara) to 6 bar absolute (30 to 600 kPa) and more desirably from 1 bar absolute to 4 bar absolute (100 to 400 kPa), and may include partial pressure from epoxide, nitrogen and optionally solvent. Time of the reaction may vary from 1 hour (h) to 24 h, and more desirably from 2 to 12 h, and most desirably from 2 to 6 h.

In one embodiment, the process of the present invention may comprise a vacuum stripping step to remove, for example, any unreacted epoxide component and/or other volatiles. In another embodiment where no-catalyst and/or only an amine catalysis is used, a vacuum stripping step is preferred. In yet another embodiment, when a super acid catalyst is used alone, or in conjunction with one or more catalysts in the process of the present invention, optionally a neutralization step may be included. For example, when a super acid catalyst is used, an equimolar amount of KOH, K2CO3, another basic basic salt, an amine, or the like may be added to neutralize the super acid. In general, it is preferred to use a vacuum finishing step in the process of the present invention. Moreover, if a super acid catalyst is used, a neutralization step comprising the addition of an equimolar amount of a base is preferred.

Based on the components in making the polyester-polyether, the polyester-polyether will have a functionality from 2.7 to 3. Preferably the polyester-polyether will have a nominal functionality of 3.

The viscosity of the resulting polyester-polyether polyol is generally less than 40,000 mPa*s at 25 °C as measured by UNI EN ISO 3219. In a further embodiment the viscosity of the polyester polyol is less than 30,000 mPa*s. While it is desirable to have a polyol with as low a viscosity as possible, due to practical chemical limitations and end-use applications, the viscosity of the polyol will generally be greater than 5,000 mPa*s.

The polyesters-polyether polyols of the present invention can be used as part of a polyol formulation for making various polyurethane products. The polyol, also referred to as the isocyanate-reactive component, along with an isocyanate component, make-up a system for producing a polyurethane. The polyester-polyether polyols may be used as part of a formulation for making a polyurethane and are particularly applicable in formulations for producing rigid foam.

The polyester-polyether polyols of the present invention may be used alone or can be blended with other known polyols to produce polyol blends. Depending on the application, the polyester-polyether polyol will generally range from 10 to 40 wt% of the total polyol formulation. In appliance insulation formulations for rigid foam applications, the polyester-polyether polyol will generally be 40 weight percent or less of the polyol blend.

Representative polyols include polyether polyols, polyester polyols, polyhydroxy-terminated acetal resins, and hydroxyl-terminated amines. Alternative polyols that may be used include polyalkylene carbonate-based polyols and polyphosphate-based polyols. Preferred are polyether or polyester polyols. Polyether polyols prepared by adding an alkylene oxide, such as ethylene oxide, propylene oxide, butylene oxide or a combination thereof, to an initiator having from 2 to 8 active hydrogen atoms. The functionality of polyol(s) used in a formulation will depend on the end use application as known to those skilled in the art. Such polyols advantageously have a functionality of at least 2, preferably 3, and up to 8, preferably up to 6, active hydrogen atoms per molecule. The polyols used for rigid foams generally have a hydroxyl number of about 200 to about 1,200 and more preferably from about 250 to about 800. In certain application, monols may also be used as part of the polyol formulation.

Polyols that are derived from renewable resources such as vegetable oils or animal fats can also be used as additional polyols. Examples of such polyols include castor oil, hydroxymethylated polyesters as described in WO 04/096882 and WO 04/096883, hydroxymethylated polyols as described in U. S. Patent Nos. 4,423,162; 4,496,487 and 4,543,369 and "blown" vegetable oils as described in US Published Patent Applications 2002/0121328, 2002/0119321 and 2002/0090488.

Generally to enhance the reactivity for the polyol system, decrease the demold time, decrease the thermal conductivity and/or to add dimensional stability to the final rigid foam, the polyol component for reaction with an isocyanate, in addition to a polyester-polyether polyol of the present invention, may contain from 5 to 65 by weight of a polyol obtained from an initiator containing at least one amine group. Such amine initiated polyol generally has a functionality of from 2 to 8, preferably 3 to 8, and an average hydroxyl number from about 200 to about 850, preferably from about 300 to about 770. In a further embodiment, the amine initiated polyol will comprise at least 10, at least 15, at least 20 or at least 25 parts by weight of the polyol formulation. Amine initiated polyols, due to the presence of nitrogen atoms, may have catalytic activity, mainly with respect to foam curing, and may have an influence on the blowing reaction.

In a further embodiment the initiator for the amine-initiated polyols is an aromatic amine, aliphatic amine or cyclo-aliphatic amine. Examples of cyclic aliphatic amines include, methylene bis(cyclohexylamine; 1,2-, 1,3- or 1,4-bis(aminomethyl)cyclohexane; an aminocyclohexanealkylamine; 2- or 4-alkylcyclohexane-1,3-diamine; isophorone diamine or a combination or diastereomeric forms thereof. Examples of linear alkyl amine, include for example, ethylene diethanolamine, N-methyldiethanolamine, ethylene diamine, diethanolamine, diisopropanolamine, monoisopropanolamine, etc. Examples of suitable aromatic amine initiators include, for example, piperazine, aminoethylpiperazine, 1,2-, 1,3- and 1,4-phenylenediamine; 2,3-, 2,4-, 3,4- and 2,6-toluene diamine; 4,4'-, 2,4'- and 2,2'-diaminodiphenylmethane; polyphenyl-polymethylene-polyamine. In one embodiment, a polyol component used with the polyester-polyether polyol of the present inventions is a toluene diamine (TDA)-initiated polyol, and even more preferably wherein at least 85 weight percent of the TDA is ortho-TDA. Ethylene diamine- and toluene diamine-initiated polyols are preferred amine initiated polyols for use with the polyester-polyether polyols of the present invention.

In addition to an amine initiated polyols, to increase cross-linking network the polyol blend may contain a higher functional polyol having a functionality of 5 to 8. Initiators for such polyols include, for example, pentaerythritol, sorbitol, sucrose, glucose, fructose or other sugars, and the like. As with the amine initiated polyols, such higher functional polyols will have an average hydroxyl number from about 200 to about 850, preferably from about 300 to about 770. Other initiators may be added to the higher functional polyols, such a glycerin to give co-initiated polyols functionality of from 4.5 to 7 hydroxyl groups per molecule and a hydroxyl equivalent weight of 100 to 175,. When used, such polyols will generally comprise from 5 to 60 wt% of the polyol formulation for making a rigid foam, depending on the particular application.

The polyol mixture may contain up to 20% by weight of still another polyol, which is not the polyester-polyether polyol, an amine-initiated polyol or a higher functional polyol and which has a hydroxyl functionality of 2.0 to 3.0 and a hydroxyl equivalent weight of from 90 to 600.

In one embodiment, the invention provides a polyol blend comprising from 10 to 40 weight percent of a polyester-polyether polyol as described above and the remainder is at least one polyol or a combination of polyols having a functionality of 2 to 8 and molecular weight of 100 to 10,000.

Specific examples of polyol mixtures suitable for producing a rigid foam for appliance insulation include a mixture of
from 10 to 40 % by weight of the polyester-polyether polyol of the present invention,
from 0 to 65 % of at least one amine initiated polyol having a functionality of 3 to 8, and an average hydroxyl number from about 200 to about 850,
from 10 to 60 % by weight of sorbitol or sucrose/glycerin initiated polyether polyol wherein the polyol or polyol blend has a functionality of 5 to 8 and a hydroxyl equivalent weight of 200 to 850,
and up to 30 % by weight of another polyols having a hydroxyl functionality of 2.0 to 3.0 and a hydroxyl equivalent weight of from 30 to 500.

Polyol mixtures as described can be prepared by making the constituent polyols individually, and then blending them together. Alternatively, polyol mixtures, not including the polyester-polyether polyol, can be prepared by forming a mixture of the respective initiator compounds, and then alkoxylating the initiator mixture to form the polyol mixture directly. Combinations of these approaches can also be used.

For rigid foam applications, the polyols used with the polyester-polyether polyols will generally be based on polyoxypropylene, that is, comprise 70 wt% or greater of polyoxypropylene units.

Suitable polyisocyanates for producing polyurethane products include aromatic, cycloaliphatic and aliphatic isocyanates. Such isocyanates are well known in the art.

Examples of suitable aromatic isocyanates include the 4,4'-, 2,4' and 2,2'-isomers of diphenylmethane diisocyante (MDI), blends thereof and polymeric and monomeric MDI blends, toluene-2,4- and 2,6-diisocyante (TDI) m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. In one embodiment, TDI/MDI blends are used.

Examples of aliphatic polyisocyanates include ethylene diisocyanate, 1,6-hexamethylene diisocyanate, 1,3- and/or 1,4-bis(isocyanatomethyl)cyclohexane (including cis- or trans-isomers of either), isophorone diisocyanate (IPDI), tetramethylene-1,4-diisocyanate, methylene bis(cyclohexaneisocyanate) (H₁₂MDI), cyclohexane 1,4-diisocyanate, 4,4'-dicyclohexylmethane diisocyanate, saturated analogues of the above mentioned aromatic isocyanates and mixtures thereof.

Derivatives of any of the foregoing polyisocyanate groups that contain biuret, urea, carbodiimide, allophonate and/or isocyanurate groups can also be used. These derivatives often have increased isocyanate functionalities and are desirably used when a more highly crosslinked product is desired.

For production of rigid polyurethane or polyisocyanruate materials, the polyisocyanate is generally a diphenylmethane-4,4'-diisocyanate, diphenylmethane-2,4'-diisocyanate, polymers or derivatives thereof or a mixture thereof. In one preferred embodiment, the isocyanate-terminated prepolymers are prepared with 4,4'-MDI, or other MDI blends containing a substantial portion or the 4.4'-isomer or MDI modified as described above. Preferably the MDI contains 45 to 95 percent by weight of the 4,4'-isomer.

The isocyanate component may be in the form of isocyanate terminated prepolymers formed by the reaction of an excess of an isocyanate with a polyol or polyester, including polyester-polyether polyol of the present invention.

The polyester-polyether polyols of the present invention may be used for the production of hydroxyl terminated prepolymers formed by the reaction of an excess of the polyester-polyether polyol with an isocyanate.

The polyisocyanate is used in an amount sufficient to provide an isocyanate index of from 80 to 600. Isocyanate index is calculated as the number of reactive isocyanate groups provided by the polyisocyanate component divided by the number of isocyanate-reactive groups in the polyurethane-forming composition (including those contained by isocyanate-reactive blowing agents such as water) and multiplying by 100. Water is considered to have two isocyanate-reactive groups per molecule for purposes of calculating isocyanate index. A preferred isocyanate index is from 90 to 400. For rigid foam applications, the isocyanate index is generally from is from 100 to 150. For polyurethane-polyisocyanurate products, the isocyanate index will generally be greater than 150 up to 800.

It is also possible to use one or more chain extenders in the formulation for production of polyurethane products. The presence of a chain extending agent provides for desirable physical properties, of the resulting polymer. The chain extenders may be blended with the polyol component or may be present as a separate stream during the formation of the polyurethane polymer. A chain extender is a material having two isocyanate-reactive groups per molecule and an equivalent weight per isocyanate-reactive group of less than 400, preferably less than 300 and especially from 31-125 daltons. Crosslinkers may also be included in formulations for the production of polyurethane polymers of the present invention. Crosslinkers are materials having three or more isocyanate-reactive groups per molecule and an equivalent weight per isocyanate-reactive group of less than 400. Crosslinkers preferably contain from 3-8, especially from 3-4 hydroxyl, primary amine or secondary amine groups per molecule and have an equivalent weight of from 30 to about 200, especially from 50-125.

The polyester-polyether polyols of the present invention may be utilized with a wide variety of blowing agents. The blowing agent used in the polyurethane-forming composition includes at least one physical blowing agent which is a hydrocarbon, hydrofluorocarbon, hydrochlorofluorocarbon, fluorocarbon, dialkyl ether or a fluorine-substituted dialkyl ether, or a mixture of two or more thereof. Blowing agents of these types include propane, isopentane, n-pentane, n-butane, isobutane, isobutene, cyclopentane, dimethyl ether, 1,1-dichloro-1-fluoroethane (HCFC-141b), chlorodifluoromethane (HCFC-22), 1-chloro-1,1-difluoroethane (HCFC-142b), 1,1,1,2-tetrafluoroethane (HFC-134a), 1,1,1,3,3-pentafluorobutane (HFC-365mfc), 1,1-difluoroethane (HFC-152a), 1,1,1,2,3,3,3-heptafluoropropane (HFC-227ea), 1,1,1,3,3-pentafluoropropane (HFC-245fa), hydrofluoroolefin (HCFO), hydrofluoroolefin (HFO), and combinations of such blowing agent. Examples of HFO and HFCO blowing agents include pentafluoropropenes, such as HFO-1225yez and HFO-1225ye; tetrafluoropropenes, such as HFO-1234yf and HFO-1234ez, HFO-1336mzz, HCFO-1233zd, HCFO-1223, HCFO-1233xf. Such blowing agents are disclose in numerous publications, for example, publications WO2008121785A1 WO2008121790A1; US 2008/0125506; US 2011/0031436; US2009/0099272; US2010/0105788 and US2011/0210289 The hydrocarbon and hydrofluorocarbon blowing agents are preferred. The polyester-polyether polyol of the present invention displays good compatibility with hydrocarbon blowing agents, such as various isomers of pentane and butane. In a further embodiment the hydrocarbon blowing agent utilized is cyclopentane. It is generally preferred to further include water in the formulation, in addition to the physical blowing agent.

Blowing agent(s) are preferably used in an amount sufficient such that the formulation cures to form a foam having a molded density of from 16 to 160 kg/m³, preferably from 16 to 64 kg/m³ and especially from 20 to 48 kg/m³. To achieve these densities, the hydrocarbon or hydrofluorocarbon blowing agent conveniently is used in an amount ranging from about 10 to about 40, preferably from about 12 to about 35, parts by weight per 100 parts by weight polyol(s). Water reacts with isocyanate groups to produce carbon dioxide, which acts as an expanding gas. Water is suitably used in an amount within the range of 0.5 to 3.5, preferably from 1.0 to 3.0 parts by weight per 100 parts by weight of polyol(s).

The polyurethane-forming composition typically will include at least one catalyst for the reaction of the polyol(s) and/or water with the polyisocyanate. Suitable urethane-forming catalysts include those described by U.S. Pat. No. 4,390,645 and in WO 02/079340. Representative catalysts include tertiary amine and phosphine compounds, chelates of various metals, acidic metal salts of strong acids; strong bases, alcoholates and phenolates of various metals, salts of organic acids with a variety of metals, organometallic derivatives of tetravalent tin, trivalent and pentavalent As, Sb and Bi and metal carbonyls of iron and cobalt.

Tertiary amine catalysts are generally preferred. Among the tertiary amine catalysts are dimethylbenzylamine (such as Desmorapid® DB from Rhine Chemie), 1,8-diaza (5,4,0)undecane-7 (such as Polycat® SA-1 from Air Products), pentamethyldiethylenetriamine (such as Polycat® 5 from Air Products), dimethylcyclohexylamine (such as Polycat® 8 from Air Products), triethylene diamine (such as Dabco® 33LV from Air Products), dimethyl ethyl amine, n-ethyl morpholine, N-alkyl dimethylamine compounds such as N-ethyl N,N-dimethyl amine and N-cetyl N,N-dimethylamine, N-alkyl morpholine compounds such as N-ethyl morpholine and N-coco morpholine, and the like. Other tertiary amine catalysts that are useful include those sold by Air Products under the trade names Dabco® NE1060, Dabco® NE1070, Dabco® NE500, Dabco® TMR-2, Dabco® TMR 30, Polycat® 1058, Polycat® 11, Polycat 15, Polycat® 33 Polycat® 41 and Dabco® MD45, and those sold by Huntsman under the trade names ZR 50 and ZR 70. In addition, certain amine-initiated polyols can be used herein as catalyst materials, including those described in WO 01/58976 A. Mixtures of two or more of the foregoing can be used.

The catalyst is used in catalytically sufficient amounts. For the preferred tertiary amine catalysts, a suitable amount of the catalysts is from about 1 to about 4 parts, especially from about 1.5 to about 3 parts, of tertiary amine catalyst(s) per 100 parts by weight of the polyol(s).

The polyurethane-forming composition also preferably contains at least one surfactant, which helps to stabilize the cells of the composition as gas evolves to form bubbles and expand the foam. Examples of suitable surfactants include alkali metal and amine salts of fatty acids such as sodium oleate, sodium stearate sodium ricinolates, diethanolamine oleate, diethanolamine stearate, diethanolamine ricinoleate, and the like: alkali metal and amine salts of sulfonic acids such as dodecylbenzenesulfonic acid and dinaphthylmethanedisulfonic acid; ricinoleic acid; siloxane-oxalkylene polymers or copolymers and other organopolysiloxanes; oxyethylated alkylphenols (such as Tergitol NP9 and Triton X100, from The Dow Chemical Company); oxyethylated fatty alcohols such as Tergitol 15-S-9, from The Dow Chemical Company; paraffin oils; castor oil; ricinoleic acid esters; turkey red oil; peanut oil; paraffins; fatty alcohols; dimethyl polysiloxanes and oligomeric acrylates with polyoxyalkylene and fluoroalkane side groups. These surfactants are generally used in amount of 0.01 to 6 parts by weight based on 100 parts by weight of the polyol.

Organosilicone surfactants are generally preferred types. A wide variety of these organosilicone surfactants are commercially available, including those sold by Evonik Industries under the Tegostab® name (such as Tegostab B-8462, B8427, B8433 and B-8404 surfactants), those sold by Momentive under the Niax® name (such as Niax® L6900 and L6988 surfactants) as well as various surfactant products commercially available from Air Products and Chemicals, such as DC-193, DC-198, DC-5000, DC-5043 and DC-5098 surfactants.

In addition to the foregoing ingredients, the polyurethane-forming composition may include various auxiliary components such as fillers, colorants, odor masks, flame retardants, biocides, antioxidants, UV stabilizers, antistatic agents, viscosity modifiers and the like.

Examples of suitable flame retardants include phosphorus compounds, halogen-containing compounds and melamine.

Examples of fillers and pigments include calcium carbonate, titanium dioxide, iron oxide, chromium oxide, azo/diazo dyes, phthalocyanines, dioxazines, recycled rigid polyurethane foam and carbon black.

Examples of UV stabilizers include hydroxybenzotriazoles, zinc dibutyl thiocarbamate, 2,6-ditertiarybutyl catechol, hydroxybenzophenones, hindered amines and phosphites.

Except for fillers, the foregoing additives are generally used in small amounts. Each may constitute from 0.01 percent to 3 percent of the total weight of the polyurethane formulation. Fillers may be used in quantities as high as 50% of the total weight of the polyurethane formulation.

The polyurethane-forming composition is prepared by bringing the various components together under conditions such that the polyol(s) and isocyanate(s) react, the blowing agent generates a gas, and the composition expands and cures. All components (or any sub-combination thereof) except the polyisocyanate can be pre-blended into a formulated polyol composition if desired, which is then mixed with the polyisocyanate when the foam is to be prepared. The components may be preheated if desired, but this is usually not necessary, and the components can be brought together at about room temperature (∼22°C) to conduct the reaction. It is usually not necessary to apply heat to the composition to drive the cure, but this may be done if desired, too.

The invention is particularly useful in so-called "pour-in-place" applications, in which the polyurethane-forming composition is dispensed into a cavity and foams within the cavity to fill it and provide structural and/or thermal insulative attributes to an assembly. The nomenclature "pour-in-place" refers to the fact that the foam is created at the location where it is needed, rather than being created in one step and later assembled into place in a separate manufacturing step. Pour-in-place processes are commonly used to make appliance products such as refrigerators, freezers, and coolers and similar products which have walls that contain thermal insulation foam. The presence of amine-initiated polyol, in addition to the high functionality polyester-polyether polyol in the polyurethane-forming composition tends to provide the formulation with good flow and short demold times, while at the same time producing a low k-factor foam.

The walls of appliances such as refrigerators, freezers and coolers are most conveniently insulated in accordance with the invention by first assembling an outer shell and an interior liner together, such that a cavity is formed between the shell and liner. The cavity defines the space to be insulated as well as the dimensions and shape of the foam that is produced. Typically, the shell and liner are bonded together in some way, such as by welding, melt-bonding or through use of some adhesive (or some combination of these) prior to introduction of the foam formulation. In most cases, the shell and liner may be supported or held in the correct relative positions using a jig or other apparatus. One or more inlets to the cavity are provided, through which the foam formulation can be introduced. Usually, one or more outlets are provided to allow air in the cavity to escape as the cavity is filled with the foam formulation and the foam formulation expands.

The materials of construction of the shell and liner are not particularly critical, provided that they can withstand the conditions of the curing and expansion reactions of the foam formulation. In most cases, the materials of construction will be selected with regard to specific performance attributes that are desired in the final product. Metals such as steel are commonly used as the shell, particularly in larger appliances such as freezers or refrigerators. Plastics such as polycarbonates, polypropylene, polyethylene styreneacrylonitrile resins, acrylonitrile-butadiene-styrene resins or high-impact polystyrene are used more often in smaller appliances (such as coolers) or those in which low weight is important. The liner may be a metal, but is more typically a plastic as just described.

The foam formulation is then introduced into the cavity. The various components of the foam formulation are mixed together and the mixture introduced quickly into the cavity, where the components react and expand. It is common to pre-mix the polyol(s) together with the water and blowing agent (and often catalyst and/or surfactant as well) to produce a formulated polyol. The formulated polyol can be stored until it is time to prepare the foam, at which time it is mixed with the polyisocyanate and introduced into the cavity. It is usually not required to heat the components prior to introducing them into the cavity, nor it is usually required to heat the formulation within the cavity to drive the cure, although either or both of these steps may be taken if desired. The shell and liner may act as a heat sink in some cases, and remove heat from the reacting foam formulation. If necessary, the shell and/or liner can be heated somewhat (such as up to 50°C and more typically 35-40°C) to reduce this heat sink effect, or to drive the cure.

Enough of the foam formulation is introduced such that, after it has expanded, the resulting foam fills those portions of the cavity where foam is desired. Most typically, essentially the entire cavity is filled with foam. It is generally preferred to "overpack" the cavity slightly, by introducing more of the foam formulation than is minimally needed to fill the cavity, thereby increasing the foam density slightly. The overpacking provides benefits such as better dimensional stability of the foam, especially in the period following demold. Generally, the cavity is overpacked by from 4 to 20% by weight. The final foam density for most appliance applications is preferably in the range of from 28 to 40 kg/m³.
After the foam formulation has expanded and cured enough to be dimensionally stable, the resulting assembly can be "demolded" by removing it from the jig or other support that is used to maintain the shell and liner in their correct relative positions. Short demold times are important to the appliance industry, as shorter demold times allow more parts to be made per unit time on a given piece of manufacturing equipment. The assembly line can be equipped with either movable or stationary fixtures. The polyester-polyether polyols of the present invention are particularly suitable where a demold time of less than 10 minutes is desired. The polyester-polyether polyol polyols may also be used for giving a demold time below 7 minutes, and even below 6 minutes.

If desired, the process of producing appliances can be practiced in conjunction with vacuum assisted injection (VAI) methods described, for example, in WO publications 2007/058793 and WO 2010/044361, in which the reaction mixture is injected into a closed mold cavity which is at a reduced pressure. In the VAI process, the mold pressure is reduced to 300 to 950 mbar (30-95 kPa), preferably from 400 to 900 mbar (40-90 kPa) and even more preferably from 500 to 850 mbar (50-85 kPa), before or immediately after the foam forming composition is charged to the mold. Furthermore, the packing factor should be from 1.03 to 1.9. Generally when vacuum assisted injection is used, the overpack may be up to 40% by weight.

The following examples are provided to illustrate the invention, but are not intended to limit the scope thereof. All parts and percentages are by weight unless otherwise indicated.

A description of the raw materials used in the examples is as follows.

VORANOL CP 450 is a glycerin initiated polyoxypropylene polyol having a molecular weight of about 450.

VORANOL CP 260 is a glycerin initiated polyoxypropylene polyol having a molecular weight of about 260.

VORANOL™ RN482 polyol is a sorbitol initiated polyoxypropylene polyol having a molecular weight of about 700. VORANOL is a Trademark of The Dow Chemical Company.

Polyol 1 is a glycerin initiated polyoxypropylene polyol having a molecular weight of about 1055 and hydroxyl number of approximately 156.

Polyol 2 is an orthotoluenediamine initiated polyoxypropylene-polyoxyethylene (98/8 mixed feed) polyol having a molecular weight of about 510.

Polyol 3 is a polypropylene glycol having a molecular weight of about 425 and hydroxyl number of approximately 264.

Polyol 4 is a glycerin initiated polyoxypropylene polyol having a molecular weight of about 360.

Stepanpol PS 2352 is a modified diethylene glycol- phthalic anhydride based polyester polyol having a reported hydroxyl value of 230-250 available from Stepan Company.

PAPI 27 isocyanate is a polymethyl polyphenyl isocyanate that contains MDI, having an average functionality of 2.7 and a molecular weight of 340.

Production of Polyester #1. 2000 grams of raw materials, diethylene glycol (15.3wt%), VORANOL CP450 polyol (59.7wt%) and terephthalic acid (25wt%) are charged to a 3000 ml glass flask equipped with a nitrogen inlet tube, pneumatic stirrer, thermometer and condenser. Heat is applied and the flask contents raised to 230-235°C. At a temperature of 180°C a titanium acetylacetonate catalyst (Tyzor AA-105 from Du Pont) is charged (50 ppm) and a little flow of nitrogen is applied. The mixture is held at 230-235°C for 8 hours. The polyester polyol at this point has an acid No. below 2 mgKOH/g. The content of the flask is cooled to room temperature under atmospheric conditions.

### Production of Polyester-Polyether Polyol #1 (PES-PE1)

Eight hundred grams (8.69 mol) glycerine and 1286.6 g (8.69 mol) phthalic anhydride are mixed in 5 L stainless steel alkoxylation reactor. The reaction mixture is flushed 10 times with 6 bar (600 kPa) nitrogen (N₂) pressure without stirring. The reactor is thermostated at 110°C with 6 bar of N₂ pressure. Initially the solid reactor content gradually dissolves in the reactor, becoming mainly liquid after 0.5 h at this temperature. Stirring is switched on, gradually increasing the stirring rate from 50 to 200 rpm. The reactor content is stirred for an additional 1.5 h. The reactor temperature is increased to 130°C. The N₂ pressure in the reactor is reduced to 1.0 bar, and the stirring rate is increased to 400 rpm. PO (1917.0 g, 33.00 mol) is fed to the reactor at a feed rate of 15 g/min over 130 min. The immediate reaction start is accompanied by an exotherm. At the completion of the feed the total pressure in the reactor has reached 6 bar (600 kPa). 2.5 h of additional digestion time is allowed. The total pressure in the reactor decreases to 5.0 bar (500 kPa). The reactor temperature is decreased to 100°C. 1.00 g of a 10% solution of triflic acid (20 ppm TFA based on the weight of product) in ethanol is injected into the reactor with the help of a pressurized stainless steel bomb, connected to the reactor. Immediate pressure drop in the reactor and an exotherm are observed. An additional 10 min of digestion time is allowed. Additional PO (643.0 g, 11.08 mol) is fed to the reactor at a feed rate of 15 g/min over 45 min. The immediate reaction start is accompanied by an exotherm. Upon the end of this feed, 15 min of additional digestion time is allowed. Residual nitrogen pressure is vented off, the reaction mixture is flushed 10 times with 6 bar (600 kPa) N₂ pressure. Potassium carbonate (0.05 g, 0.36 mmol) added to the product in order to neutralize the remaining triflic acid. The product is then stripped in vacuum for 2 h at 100°C. A colorless viscous liquid is obtained.

The produced hybrid polyester-polyether polyol has the following properties: OH value: 310 mg KOH/g; Viscosity at 25°C: 10800 mPa.s; Density at 25°C: 1.146 g/cm³; pH: 4.7.: Mn=330 g/mol, Mw/Mn=1.21.

### Production of Polyester-Polyether Polyol #2 (PES-PE2)

2011.0 g (7.89 mol) of VORANOL* CP260 triol polyether polyol, 1520.4 g (10.25 mol) phthalic anhydride and 0.20 g of 2-Ethyl-4-Methyl-Imidazole (EMI, 41 ppm based on the weight of product) are mixed with stirring at 50 rpm in 5 L stainless steel alkoxylation reactor. The reaction mixture is flushed 10 times with 6 bar (600 kPa) nitrogen (N₂) pressure. The reactor is thermostated at 130°C with 6 bar of N₂ pressure. The obtained slurry gradually dissolves in the reactor, becoming mainly liquid after 0.5 h at this temperature. The stirring rate is gradually increased from 50 to 200 rpm. The reactor content is stirred for an additional 1.5 h. The N₂ pressure in the reactor is reduced to 1.0 bar, and the stirring rate is increased to 300 rpm. PO (1246.0 g, 21.46 mol) is fed to the reactor at a feed rate of 15 g/min over 85 min. The immediate reaction start is accompanied by an exotherm. At the completion of the feed the total pressure in the reactor has reached 4.9 bar (490 kPa). 3.0 h of additional digestion time is allowed. The total pressure in the reactor decreases to 4.3 bar (430 kPa). The reactor temperature is decreased to 100°C. 6.80 g of a 10% solution of triflic acid (TFA, 142 ppm based on the weight of product) in ethanol is injected into the reactor with the help of a pressurized stainless steel bomb, connected to the reactor. Immediate pressure drop in the reactor and an exotherm are observed. 30 min of additional digestion time is allowed. Residual nitrogen pressure is vented off, the reaction mixture is flushed 10 times with 6 bar (600 kPa) N₂ pressure. Potassium hydroxide (7.16 g, 0.5 mol/l solution in ethanol) is injected into the reactor with the help of a pressurized stainless steel bomb, connected to the reactor, in order to neutralize the remaining triflic acid. The product is then stripped in vacuum for 1 h at 120°C. A colorless viscous liquid is obtained.

The produced hybrid polyester-polyether polyol SP11-33 has the following properties: OH value: 276 mg KOH/g; Viscosity at 25°C: 31700 mPa.s; Density at 25°C: 1.156 g/cm³; pH: 5.9; Mn=460 g/mol, Mw/Mn=1.17.

### Examples 1 and 2 and Comparative Examples C1 and C2

The compatibility of formulations containing polyesters of the present invention with a hydrocarbon blowing agent (cyclo-pentane) is measured based on the following formations:
Formulation 1: 57.7 parts of VORANOL RN-482; 20 parts of Polyol 1; 14 parts of reference polyester or polyester-polyether; 2.3 parts water; 3 parts TEGOSTAB™ 8462 Silicone Surfactant; and 2.9 parts of a catalyst package comprising 0.6 parts DABCO TMR-30, 0.1 parts DABCO K2097, 1.2 parts POLYCAT 5 (PMDETA), and 1 part POLYCAT 8 (DMCHA).
Formulation 2: 52.7 parts of VORANOL RN-482; 25 parts of Polyol 1; 14 parts of reference polyester or polyester-polyether; 2.3 part water; 3 parts TEGOSTAB™ 8462 Silicone Surfactant; and 3 parts of a catalyst package comprising 0.6 parts DABCO TMR-30, 0.1 parts DABCO K2097, 1.2 parts POLYCAT 5 (PMDETA), and 1.1 part POLYCAT 8 (DMCHA).

The samples, 200 ml of polyol/cyclopentane blend, are mixed and kept in a laboratory glass bottle (250 ml) and visually observed after sitting for 1 week at room temperature. The observations for formulations 1 and 2 are given in Table 1. Comparative C1 and C2 are formulations containing polyesters PS-2352 and Polyester 1 respectively; Examples 1 and 2 are based on formulations containing polyester-polyether polyol 1 and polyester-polyether polyol 2 respectively.

**Table 1**

| Formulation 1 | Example C1 | Example C2 | Example 1 | Example 2 |
|---|---|---|---|---|
| 14 pbw Cp^{*} | --- | phsep | --- | --- |
| 16 pbw Cp | phsep | phsep | hazy | hazy |
| | | | | |

| Formulation 2 | | | | |
|---|---|---|---|---|
| 16 pbw Cp | hazy | phsep | Clear | clear |
| 18 pbw Cp | phsep | ----- | hazy | hazy |

| | | | | |
|---|---|---|---|---|
| ^{*}parts by weight of cyclo-pentane per 100 parts by weight of the formulation. phsep = phase separation | | | | |

The results indicate the inclusion of a polyester-polyether polyol of the present invention in formulations useful for the production of rigid foam show significant improvements in the hydrocarbon solubility.

### Examples 3 and 4 and Comparative Examples C3 and C4

The polyester-polyether polyols described above were used to prepare polyurethane foam. The components of the polyol formulations are as given for Formulation 2 above with the use of 135 parts VORANATE M220 isocyanate per 116 parts of the Formulation 2.

Foam samples are prepared using high pressure injection machines and dispensing equipment from Afros-Cannon. The formulated polyols and blowing agent are premixed. The formulated polyol, blowing agent and isocyanate are processed on a high pressure injection machine at a temperature of 20±2°C using a mix pressure of 150±20 bar (15000±2000 kPa). The isocyanate index is kept constant at 1.15-1.16 for all the foam samples prepared. The foam samples are evaluated for reactivity, flow, density distribution, compressive strength, thermal conductivity and demolding properties. Properties are determined according to the following protocols:
(1) Reactivity and free rise density: A free rise box (38 cm x 38 cm x24 cm) foam is prepared to measure the reactivity of the formulation and the Free Rise Density (FRD) of the foam. The cream time, the gel time and the tack free time are recorded during the foam rise. The FRD is measured 24 h after foaming.

Foam physical properties: The foam physical properties are evaluated using a Brett mold (200×20×5 cubic centimeters (cm³)) filled at a 45° angle and immediately raised to the vertical position. The mold is maintained at 45°C. The minimum fill density (MFD) is determined and panels at 10% over-packing (OP) are produced. The over-pack is defined as the Molded Density (MD) divided by the MFD. MD is calculated from the mass of the Brett panel divided by its volume. The system flow is measured by the flow index (FI; FI=MFD/FRD). The average density deviation (ADD) is calculated based on the density of 17 specimens cut along the Brett..

Thermal conductivity (Lambda): Thermal conductivity measurements are carried out with LaserComp Fox 200 equipment at an average temperature of 10.2°C.

Compressive strength (CS): The compressive strength is measured according to ISO 844 on 5 specimens along the Brett.

Demolding properties: Demolding properties are determined with a Jumbo Mold (70x40x10 cm³) maintained at 45°C. Jumbo panels produced with an overpack factor (OP) level of 15% are demolded at 6 min, plus 2 min curing time. The post expansion of the foam is measured 24 h after demold.

The properties of the foams are given in Table 2. Polyester PS-2352 is used in Example C3; Polyester 1 in Example C4; Polyester-polyether #1 in Example 3; and Polyester-polyether #2 in Example 4 .

**Table 2**

| | Example C3 | Example C4 | Example 3 | Example 4 |
|---|---|---|---|---|
| Cream-time (sec) | 4-5 | 4-5 | 5-6 | 4-5 |
| Gel-time (sec) | 36 | 35-36 | 39-40 | 39 |
| Tack-free-time (sec) | 47 | 43-47 | 46-56 | 48 |
| FRD24h (Kg/m3) | 21.2 | 21.2 | 21.7 | 21.4 |
| Brett MFD (Kg/m3) | 27.5 | 28.2 | 28.6 | 28.4 |
| Flow Index | 1.298 | 1.330 | 1.314 | 1.327 |
| Brett Overpacking (%) | 10.6 | 10.3 | 10.4 | 10.9 |
| **Brett ADD** | **0.900** | **0.650** | **0.590** | **0.610** |
| Brett Molded Density (Kg/m3) | 30.5 | 31.1 | 31.5 | 31.5 |
| **Brett Skin Compressive Strength corrected to d=32 kg/m3 (kPa)** | **113.9** | **114.7** | **115.7** | **120.2** |
| Brett Lambda@10°C Bottom (mW/m*k) | 19.81 | 19.72 | 19.59 | 19.74 |
| **Jumbo OP15 Corrected Post- Exp DMT6' (mm)** | **6.1** | **5.2** | **5.4** | **5.2** |

As shown in Table 3, the polyester-polyether polyols of the present invention have the following properties: Both Example-3 and 4 show lower (better) ADD against Example C3, while they are aligned to Example C4. Example 4 shows slightly improved compressive strength vs. two comparative examples (Brett OP10). Example 3 shows lambda reduction (improvement) around -1% in Brett OP10. Both Example 3 and Example 4 show improved post-expansion vs. Example C3 and aligned to Example C4 at 6 minute demolding time.

### Example 5 and Comparatives C5 and C6

The polyester-polyether polyols of the present inventions were used to prepare polyurethane foam based on the formulations given in Table 3.

**Table 3**

| **Polyol Side Component** | **Parts** |
|---|---|
| Polyol 2 | 60 |
| RN 482 | 13 |
| Polyol 3 | 5 |
| Glycerin | 3.5 |
| Polyester or polyester-polyether polyol | 18.5 |
| Catalyst/Surfactant Package* | 5.6 |
| Water | 1.2 |
| Cyclo Pentane | 19 |
| *Total Polyol* | 125.8 |

| **Isocyanate Side Component** | |
|---|---|
| PAPI 27 | 141.5 |

| | |
|---|---|
| *4 parts of NIAX Silicone L-6915; 1.6 parts of a catalyst package comprising 1.2 parts POLYCAT 5 (PMDETA) and 0.4 parts of POLYCAT-41. | |

Foams are produced using a high pressure machine Hi-Tech Eco-RIM. Both the polyol formulation and PAPI27 are preheated to 70+/- 2 F (21.1 °C) prior to mixing with high pressure impingement mixer. The reacting mixture are dispensed into an aluminum mold (Brett mold, 200 x 20 x 5 cm) preheated to 125 °F (51.7 °C). The demold expansion are measured at 10% overpack by opening the mold 3 minutes after injection. The maximum expansion of the mold lid is then recorded. Samples for k-factor and compressive strength are post-cured overnight before cutting. Once cut, the foam samples were tested within 4 hours. Compressive strength was measured according to ASTM D1621 and k-factor measured according to ASTM C518.

The properties of the foams are given in Table 4, along with the stability of the polyol/cyclopentane mixture. Polyester PS-2352 in used in Example C3; Polyester 1 in Example C4; and Polyester-polyether #1 in Example 3. The presented data are an average of 7 runs.

**Table 4**

| Example | Example C5 | Example C6 | Example 5 |
|---|---|---|---|
| Get-time (sec) | 28 | 32 | 34 |
| Minimum Fill density lb/ft³ (Kg/m³) | 2.12 (34.0) | 2.19 (35.1) | 2.18 (34.9) |
| Core density density lb/ft³ (Kg/m³) | 2 (32.0) | 2.03 (32.5) | 1.98 (31.7) |
| k-factor BTU-in/hr-ft2 °F (mW/m-K) | 0.137 (19.7) | 0.135 (19.5) | 0.136 (19.6) |
| Demold expansion at 3 min-inches (mm) | 0.071 (1.8) | 0.048 (1.2) | 0.048 (1.2) |
| Compressive strength-psi (normalized) (kPa) | 17 (117) | 15 (103) | 16 (110) |
| Stability | Clear | Poor | Clear |

As shown in Table 4, the polyester-polyether polyols of the present invention have improved demold expansion properties as compared to example C5 and improved stability with hydrocarbon blowing agents versus the polyester of C6.

### Example 6 and Comparatives C7 and C8

The applicability of the polyester-polyether polyols for production of foam using a hydrofluorocarbon blowing agent is determined using the base formulation shown in Table 5. Polyester PS-2352 in used in Example C7; Polyester 1 in Example C8; and polyester-polyether #1 in Example 6.

**Table 5**

| **Polyol Side Component** | **Parts** |
|---|---|
| Polyol 2 | 25 |
| Polyol 4 | 55 |
| Polyester or polyester-polyether polyol | 20 |
| Catalsyt/Surfactant* | 4.8 |
| Water | 3.25 |
| HFC-245fa | 23 |
| PAPI 27 | 141.5 |

| | |
|---|---|
| *3.3 parts of NIAX Silicone L-6952; 1.5parts of a catalyst package comprising 0.7 parts POLYCAT 5 (PMDETA), 0.4 parts of POLYCAT-41 and 0.4 parts of POLYCAT-77. | |

Foams are produced as per the procedure given under Example 5. The properties of the produced foams are given in Table 6.

**Table 6**

| Example | Example C7 | Example C8 | Example 6 |
|---|---|---|---|
| Demold expansion at 3 min (10% op) - inches (mm) | 0.062 (1.6) | 0.039 (0.99) | 0.037 (0.94) |
| k-factor (10% op) BTU-in/hr-ft2 °F (mW/m-K) | 0.140 (20.2) | 0.141 (20.3) | 0.140 (20.2) |
| Compressive strength in psi (10% op) (normalized) (kPa) | 17.6 (121) | 17.5 (121) | 17.2(119) |

The results show the polyester-polyether polyols of the present invention have improved demold expansion properties over the comparatives.

Other embodiments of the invention will be apparent to those skilled in the art from a consideration of this specification or practice of the invention disclosed herein. It is intended that the specification and examples be considered as exemplary only, with the true scope of the invention being indicated by the following claims.

## Claims

1. A polyol blend comprising:-
from 10 to 40 weight percent of a polyester-polyether produced by the steps of:
1) mixing phthalic anhydride with an alcohol having a nominal functionality of 3 and a molecular weight of 90 to 500 under conditions to form a phthalic anhydride half-ester; and
2) alkoxylating the half-ester formed in step 1 to form a polyester-polyether polyol having a hydroxyl number of from 200 to 350;
wherein the alcohol is a polyether polyol, the polyether polyol contains at least 70 weight percent of polyoxypropylene;
and wherein the remainder of the blend is at least one second polyol wherein the second polyol is a polyether polyol, a polyester polyol or a combination thereof having a functionality of 2 to 8 and a molecular weight of 100 to 2,000.

2. The polyol blend of claim 1 wherein the molar ratio of anhydride to polyalcohol in the reaction product of phthalic anhydride with alcohol having a nominal functionality of 3 is from 1:1 to 1:1.5.

3. The polyol blend of claim 1 wherein the mixing of phthalic anhydride with alcohol having a nominal functionality of 3 is done at a temperature of from 90 °C to 140 °C.

4. A reaction system for production of a rigid foam comprising a polyol composition comprising:
1) a polyol component comprising from 10 to 40 weight percent of a polyol which is the reaction product of
A) phthalic anhydride
B) a 3 functional alcohol having a molecular weight of 90 to 500, wherein the alcohol is a polyether polyol containing at least 70 weight percent of polyoxypropylene;
C) an epoxide,
wherein A and B are present in a molar ratio of 1:1 to 1:1.5, and C is present in the reaction in an amount to give a polyester-polyether polyol with a hydroxyl number of 200 to 350;
2) a polyisocyanate and
3) optionally additives and auxiliaries known per se.

5. A process for preparing a rigid polyurethane foam, comprising
a) forming a reactive mixture containing at least
A) a polyol component comprising from 10 to 40 weight percent of a polyester-polyether polyol produced by the steps of:
1) mixing phthalic anhydride with an alcohol having a nominal functionality of 3 and a molecular weight of 90 to 500 under conditions to form a phthalic anhydride half-ester; and
2) alkoxylating the half-ester formed in step 1 to form a polyester-polyether polyol having a hydroxyl number of from 200 to 350;
wherein the alcohol is a polyether polyol, the polyether polyol contains at least 70 weight percent of polyoxypropylene,
and at least one other polyol
B) a polyisocyanate,
C) at least one hydrocarbon, hydrofluorocarbon, hydrochlorofluorocarbon, fluorocarbon, dialkyl ether, hydrofluoroolefin (HFO), hydrochlorofluoroolefin (HCFO), fluorine-substituted dialkyl ether physical blowing agent; and
b) subjecting the reactive mixture to conditions such that the reactive mixture expands and cures to form a rigid polyurethane foam.

6. The process of claim 5 wherein the polyol component contains from 10 to 40 weight percent of the polyester-polyether polyol.

## Patentansprüche

1. Ein Polyolgemisch, das Folgendes beinhaltet:
zu 10 bis 40 Gewichtsprozent einen Polyester-Polyether, hergestellt durch die folgenden Schritte:
1) Mischen von Phthalsäureanhydrid mit einem Alkohol, der eine nominale Funktionalität von 3 und ein Molekulargewicht von 90 bis 500 aufweist, unter Bedingungen, um einen Phthalsäureanhydrid-Halbester zu bilden; und
2) Alkoxylieren des Halbesters, der in Schritt 1 gebildet wird, um ein Polyester-Polyether-Polyol mit einer Hydroxylzahl von 200 bis 350 zu bilden;
wobei der Alkohol ein Polyetherpolyol ist, wobei das Polyetherpolyol mindestens 70 Gewichtsprozent Polyoxypropylen enthält;
und wobei der Rest des Gemischs mindestens ein zweites Polyol ist, wobei das zweite Polyol ein Polyetherpolyol, ein Polyesterpolyol oder eine Kombination davon mit einer Funktionalität von 2 bis 8 und einem Molekulargewicht von 100 bis 2000 ist.

2. Polyolgemisch gemäß Anspruch 1, wobei das Molverhältnis von Anhydrid zu Polyalkohol in dem Reaktionsprodukt von Phthalsäureanhydrid mit Alkohol, der eine nominale Funktionalität von 3 aufweist, von 1 : 1 bis 1 : 1,5 beträgt.

3. Polyolgemisch gemäß Anspruch 1, wobei das Mischen des Phthalsäureanhydrids mit Alkohol mit einer nominalen Funktionalität von 3 bei einer Temperatur von 90 °C bis 140 °C vorgenommen wird.

4. Ein Reaktionssystem zur Herstellung eines Hartschaums, beinhaltend eine Polyolzusammensetzung, beinhaltend:
1) eine Polyolkomponente, die zu 10 bis 40 Gewichtsprozent ein Polyol beinhaltet, das das Reaktionsprodukt von Folgendem ist:
A) Phthalsäureanhydrid
B) einem 3-funktionellen Alkohol mit einem Molekulargewicht von 90 bis 500, wobei der Alkohol ein Polyetherpolyol ist, das mindestens 70 Gewichtsprozent Polyoxypropylen enthält;
C) einem Epoxid,
wobei A und B in einem Molverhältnis von 1 : 1 bis 1 : 1,5 vorhanden sind und C in der Reaktion in einer Menge vorhanden ist, um ein Polyester-Polyether-Polyol mit einer Hydroxylzahl von 200 bis 350 zu ergeben;
2) ein Polyisocyanat und
3) optional Zusatzstoffe und Hilfsstoffe, die per se bekannt sind.

5. Ein Verfahren zum Herstellen eines Polyurethanhartschaums, das Folgendes beinhaltet:
a) Bilden einer reaktiven Mischung, die mindestens Folgendes enthält:
A) eine Polyolkomponente, beinhaltend zu 10 bis 40 Gewichtsprozent ein Polyester-Polyether-Polyol, hergestellt durch die folgenden Schritte:
1) Mischen von Phthalsäureanhydrid mit einem Alkohol, der eine nominale Funktionalität von 3 und ein Molekulargewicht von 90 bis 500 aufweist, unter Bedingungen, um einen Phthalsäureanhydrid-Halbester zu bilden; und
2) Alkoxylieren des Halbesters, der in Schritt 1 gebildet wird, um ein Polyester-Polyether-Polyol mit einer Hydroxylzahl von 200 bis 350 zu bilden;
wobei der Alkohol ein Polyetherpolyol ist, wobei das Polyetherpolyol mindestens 70 Gewichtsprozent Polyoxypropylen enthält,
und mindestens ein anderes Polyol
B) ein Polyisocyanat,
C) mindestens ein physikalisches Treibmittel aus Kohlenwasserstoff, teilhalogeniertem Fluorkohlenwasserstoff, teilhalogeniertem Fluorchlorkohlenwasserstoff, Fluorkohlenwasserstoff, Dialkylether, Hydrofluorolefin (HFO), Hydrochlorfluorolefin (HCFO), fluorsubstituiertem Dialkylether; und
b) Aussetzen der reaktiven Mischung gegenüber derartigen Bedingungen, dass sich die reaktive Mischung ausdehnt und härtet, um einen Polyurethanhartschaum zu bilden.

6. Verfahren gemäß Anspruch 5, wobei die Polyolkomponente zu 10 bis 40 Gewichtsprozent das Polyester-Polyether-Polyol enthält.

## Revendications

1. Un mélange homogène de polyols comprenant :
de 10 à 40 pour cent en poids d'un polyester-polyéther produit par les étapes consistant à :
1) mélanger de l'anhydride phtalique avec un alcool ayant une fonctionnalité nominale de 3 et une masse moléculaire de 90 à 500 dans des conditions pour former un demi-ester d'anhydride phtalique ; et
2) alcoxyler le demi-ester formé à l'étape 1 pour former un polyol de polyester-polyéther ayant un indice d'hydroxyle allant de 200 à 350 ;
où l'alcool est un polyol de polyéther, le polyol de polyéther contient au moins 70 pour cent en poids de polyoxypropylène ;
et où le reste du mélange homogène est au moins un deuxième polyol où le deuxième polyol est un polyol de polyéther, un polyol de polyester ou une combinaison de ceux-ci ayant une fonctionnalité de 2 à 8 et une masse moléculaire de 100 à 2 000.

2. Le mélange homogène de polyols de la revendication 1 où le rapport molaire d'anhydride à polyalcool dans le produit réactionnel de l'anhydride phtalique avec l'alcool ayant une fonctionnalité nominale de 3 va de 1/1 à 1/1,5.

3. Le mélange homogène de polyols de la revendication 1 où le mélange d'anhydride phtalique avec l'alcool ayant une fonctionnalité nominale de 3 est fait à une température allant de 90 °C à 140 °C.

4. Un système réactionnel pour la production d'une mousse rigide comprenant une composition de polyol comprenant :
1) un constituant polyol comprenant de 10 à 40 pour cent en poids d'un polyol qui est le produit réactionnel
A) d'anhydride phtalique
B) d'un alcool 3 fonctionnel ayant une masse moléculaire de 90 à 500, où l'alcool est un polyol de polyéther contenant au moins 70 pour cent en poids de polyoxypropylène ;
C) d'un époxyde,
où A et B sont présents dans un rapport molaire de 1/1 à 1/1,5, et C est présent dans la réaction dans une quantité pour donner un polyol de polyester-polyéther avec un indice d'hydroxyle de 200 à 350 ;
2) un polyisocyanate et
3) facultativement des adjuvants et des auxiliaires connus en soi.

5. Un procédé pour la préparation d'une mousse de polyuréthane rigide, comprenant
a) la formation d'un mélange réactif contenant au moins
A) un constituant polyol comprenant de 10 à 40 pour cent en poids d'un polyol de polyester-polyéther produit par les étapes consistant à :
1) mélanger de l'anhydride phtalique avec un alcool ayant une fonctionnalité nominale de 3 et une masse moléculaire de 90 à 500 dans des conditions pour former un demi-ester d'anhydride phtalique ; et
2) alcoxyler le demi-ester formé à l'étape 1 pour former un polyol de polyester-polyéther ayant un indice d'hydroxyle allant de 200 à 350 ;
où l'alcool est un polyol de polyéther, le polyol de polyéther contient au moins 70 pour cent en poids de polyoxypropylène,
et au moins un autre polyol
B) un polyisocyanate,
C) au moins un agent gonflant physique hydrocarbure, hydrofluorocarbure, hydrochlorofluorocarbure, fluorocarbure, éther de dialkyle, hydrofluoroléfine (HFO), hydrochlorofluorooléfine (HCFO), éther de dialkyle substitué par du fluor ; et
b) la soumission du mélange réactif à des conditions telles que le mélange réactif connait une expansion et durcit pour former une mousse de polyuréthane rigide.

6. Le procédé de la revendication 5 où le constituant polyol contient de 10 à 40 pour cent en poids du polyol de polyester-polyéther.
